(19) Europäisches Patentamt
European Patent Office
Office européen des brevets

(11) EP 3 839 569 B1

(12) **EUROPEAN PATENT SPECIFICATION**

(45) Date of publication and mention of the grant of the patent:
**05.02.2025 Bulletin 2025/06**

(21) Application number: **19217457.1**

(22) Date of filing: **18.12.2019**

(51) International Patent Classification (IPC):
**G01S 19/29** (2010.01)     **G01S 19/30** (2010.01)
**H04B 1/7085** (2011.01)     **H04B 1/709** (2011.01)
**H04L 27/227** (2006.01)     **H04L 27/26** (2006.01)

(52) Cooperative Patent Classification (CPC):
**H04L 27/2278; G01S 19/30; H04B 1/7075;
H04B 1/7085; H04B 1/709;** H04B 2201/70715;
H04B 2201/70727; H04B 2201/70733;
H04L 27/2647

(54) **ACQUISITION OF SYMMETRIC SIGNALS**

ERFASSUNG SYMMETRISCHER SIGNALE

ACQUISITION DE SIGNAUX SYMÉTRIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.06.2021 Bulletin 2021/25**

(73) Proprietor: **Airbus Defence and Space GmbH
82024 Taufkirchen (DE)**

(72) Inventors:
• **FLOCH, Jean-Jacques**
**82024 Taufkirchen (DE)**
• **SOUALLE, Francis**
**82024 Taufkirchen (DE)**
• **SCHMITT, Till**
**82024 Taufkirchen (DE)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
• **DOVIS FABIO ET AL: "Multiresolution Acquisition Engine Tailored to the Galileo AltBOC Signals", GNSS 2007 - PROCEEDINGS OF THE 20TH INTERNATIONAL TECHNICAL MEETING OF THE SATELLITE DIVISION OF THE INSTITUTE OF NAVIGATION (ION GNSS 2007), THE INSTITUTE OF NAVIGATION, 8551 RIXLEW LANE SUITE 360 MANASSAS, VA 20109, USA, 28 September 2007 (2007-09-28), pages 999 - 1007, XP056010182**
• **BOTTERON C ET AL: "A Flexible Galileo E1 Receiver Platform for the Validation of Low Power and Rapid Acquisition Schemes", GNSS 2006 - PROCEEDINGS OF THE 19TH INTERNATIONAL TECHNICAL MEETING OF THE SATELLITE DIVISION OF THE INSTITUTE OF NAVIGATION (ION GNSS 2006), THE INSTITUTE OF NAVIGATION, 8551 RIXLEW LANE SUITE 360 MANASSAS, VA 20109, USA, 29 September 2006 (2006-09-29), pages 2383 - 2395, XP056009994**
• **FISCHER S ET AL: "Acquisition Concepts for Galileo BOC", PROCEEDINGS / 2004 IEEE 59TH VEHICULAR TECHNOLOGY CONFERENCE, VTC 2004-SPRING : TOWARDS A GLOBAL WIRELESS WORLD ; 17 - 19 MAY 2004, MILAN, ITALY, IEEE OPERATIONS CENTER, PISCATAWAY, NJ, vol. 5, 17 May 2004 (2004-05-17), pages 2852 - 2856, XP010766771, ISBN: 978-0-7803-8255-8, DOI: 10.1109/VETECS.2004.1391445**

EP 3 839 569 B1

- **LI YANG ET AL: "The Research of Side-Band Acquisition for BOC-Modulated Signal", WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 645 - 648, XP031261342, ISBN: 978-1-4244-1311-9**

**Description**

FIELD OF THE INVENTION

The present invention generally relates to the field of acquiring symmetric signals and, in particular to a method of acquiring symmetric signal and a corresponding apparatus for acquiring symmetric signals.

BACKGROUND TO THE INVENTION

To avoid interfering with current existing navigation signals, new signals have been designed with their frequencies offset from the carrier frequency. These signals have been designed to reduce the bit error rate for communication signals and increase accuracy and robustness for navigation signals.

These multi-carrier signals offer increased tracking performance and robustness for navigation signals and a reduction in bit error rate due to the diversity of frequencies over a wide bandwidth.

The main drawback of these signals is the acquisition process. Before starting the tracking of any signal and/or demodulating any data, the signal needs to be time synchronized and frequency Doppler synchronized. This process is rendered particularly difficult due to the large bandwidth that the signals cover.

A combination of coherent and non-coherent signal acquisition is already known to limit the complexity of wide band signals and can be applied to the acquisition of multi-carrier signals.

A method of receiving multiple signals is disclosed, for example, in EP 3 057 252 A1 which generally regards a cell search in a wireless communication network.

The signal goes through a front end which converts the signal from an analogue signal to a digital signal. The wide-band signal is divided into P sub bands, each sub-band comprising one or more sub-carriers and each sub-carrier accommodating a respective band of the N narrow-bands. For each sub-band, the one or more sub-carrier cross correlation functions for that sub-band creating a sub-band cross-correlation is coherently summed. The sub-band cross-correlation functions of all of the P sub-bands to produce a cross-correlation function for the wide-band signal is non-coherently summed.

This layout can however lead to major performance losses in the acquisition process, leading to greatly deteriorated signal output and a higher receiver complexity.

There is therefore a need for improvement in the field of acquiring of multiple signals, in particular in which the losses during the acquisition process are greatly reduced, in which the power consumption is reduced and in which there is a simplification of the method of acquisition.

Prior art can be found in Dovis Fabio et al, "Multiresolution Acquisition Engine Tailored to the Galileo AltBOC signals", in Botteron C. et al, "A Flexible Galileo E1 Receiver Platform for the Validation of Low Power and Rapid Acquisition Schemes", in Fischer S. et al, "Acquisition Concepts for Galileo BOC", and in Li Yang et al, "The Research of Side-Band Acquisition for BOC-Modulated Signal", XP031261342.

SUMMARY OF THE INVENTION

The invention is set out in the independent claims. Specific embodiments of the invention are outlined in the dependent claims.

According to a first aspect, a method for the acquisition of symmetric signals is described. The method comprises receiving one or more signal pairs symmetric about a carrier frequency. The method further comprises isolating the two signals of each of the one or more signal pairs from each other. The method further comprises modulating the two signals of each of the one or more signal pairs so that the two signals are modulated to have a same frequency. The method further comprises combining the two modulated same frequency signals of each of the one or more signal pairs to generate one uniform signal. The method further comprises implementing a Code Doppler search on the uniform signal to adjust the uniform signal. The method further comprises correlation of the adjusted uniform signal with a local replica of the expected signal. The method further comprises outputting the adjusted uniform signal.

The term modulated same frequency signals may be understood as the modulated signals having a same frequency.

The receiving of the one or more signal pairs symmetric about a carrier frequency may allow for an increase in the power and strength of the incoming signal. This may mean that the device that uses this method of acquiring symmetric signals may receive stronger, clearer signals than a conventional method of acquiring signals. A better acquisition of symmetric signal pairs may lead to a better synchronization of the symmetric signal pairs and thus, a lower bit error rate The modulation of the two signals of each of the one or more signal pairs so that the two signals are modulated to be at a same frequency may allow for a reduction in processing power. The reduction in processing power may be due to the following steps requiring the processing of one signal at a single frequency as opposed to two or more signals at different frequencies as seen in orthogonal frequency-division multiplexing.

The modulation may also reduce the complexity of the method of acquiring symmetric signals. This may be due to the signal frequency offset changes over time, as seen in orthogonal frequency-division multiplexing within 4G or 5G environments for example, not being needed to be known prior to the receipt of the signals. As a priori knowledge of the signal frequency offset sequence may not be needed, it may mean that the signal frequency offset is able to change over time without effecting the processing of the symmetric signal pairs.

The combining of the two modulated same frequency signals of each of the one or more signal pairs to generate one uniform signal may result in an increase in the power and strength of the signal being processed. This may result in a lower error rate in the Code Doppler search.

It also may reduce the power consumption of the device that uses this method. This may be due to the number of code chip hypotheses being limited to the chip rate of a single modulation as opposed to the full bandwidth of the received signal.

The implementation of a Code Doppler search on the uniform signal to adjust the uniform signal may allow for the device that uses this method to locate the correct signal pairs. The search may ensure that the correct information is output to the device.

The correlation of the adjusted uniform signal with a local replica of the expected signal may allow the device using this method to determine if the received signal pair is the correct signal pair.

In some examples, there is a plurality of signal pairs. This may allow for a great increase in the power and strength of the received signal. This in turn may lead to a lower bit error rate due to a better acquisition of signal pairs and thus, a more accurate receipt of information by the device.

In some examples, the plurality of received signal pairs are symmetric about a plurality of carrier frequencies. This may lead to a lower bit error rate due to a better acquisition of signal pairs and thus, a better synchronization of signals.

In some examples, the plurality of received signal pairs are symmetric about the same carrier frequency. This may allow for an increase in the power and strength of the incoming signal. This may mean that the device that uses this method of acquiring symmetric signals may receive stronger, clearer signals than a conventional method of acquiring signals. This in turn may lead to a reduction in the bit rate error of the signal which is output by this method. It also may allow for an increase in the amount of data and information to be transmitted to the device that uses this method as at least two full strength signals may be used. It may also allow for a reduction in the complexity of the processing of the signal pairs as only a single frequency may be needed to be processed.

In some examples, the two signals in each of the one or more signal pairs are modulated to have the same frequency, wherein the same frequency is the carrier frequency. This may lead to a reduction in the complexity of the device that uses method. This may be due to the device using this method not needed any a priori knowledge of the signal frequency offset varying over time and thus, no need for a frequency offset search.

It may also allow for a reduction in power consumption of the device that uses this method. This may be due to the code chip hypothesis being limited to the chip rate of a single modulation as opposed to the full bandwidth of the transmitted signal.

In some examples, the two signals in each of the one or more signal pairs are isolated from each other by a high pass filter and a low pass filter. This may reduce the complexity of isolating signals as only two relatively simple components are needed. It also may mean that the signal frequency offset is not needed to be known ahead of time. This may be due to the same frequency being known ahead of time and so the filters only need to filter frequencies outside the same frequency and the signals across the entire bandwidth may not matter.

Alternatively, the two signals in each of the one or more signal pairs may be isolated from each other by a down converter and an up converter.

In some examples, the Code Doppler search is implemented via an active search and/or a passive search and/or a transform search. These search methods based on a single code chip hypothesis may result in a reduction in power consumption in the processing of the uniform signal when compared to known methods of acquisition of symmetric signals. The reduction in power consumption may be due to the search being conducted in only two dimensions as opposed to three dimensions as seen in conventional methods for acquisition.

In some examples, a 3D cross-correlation function product is derived from the adjusted uniform signal and used to correlate the adjusted uniform signal with a local replica of the expected signal. This may allow the device that uses this method to recognize if the signal being received is the correct signal. The device may then recognize that the data being received is the correct data via, for example, a decision statistic and use it in the application that the device is designed for.

In some examples, the one or more 3D cross-correlation function products derived from the adjusted uniform signal are added coherently or non-coherently. This may allow the device that uses the method to receive one or more signal pairs that have equal or unequal phase offsets. This may mean that the signal frequency offset is not needed to be known prior to the receipt of the one or more signal pairs. This may increase the versatility of the device and may allow the device to acquire any number of signal pairs.

According to a second aspect, an apparatus for the acquisition of symmetric signals is described. The apparatus comprises a receiving unit and a processing unit. The receiving unit is configured to receive one or more signal pairs symmetric about a carrier frequency. The processing unit is configured to isolates the two signals of each of the one or more signal pairs from each other. The processing unit is further configured to modulate the two signals of each of the one or more signal pairs so that the two signals are modulated to have a same frequency. The processing unit is further configured to combine the two modulated same frequency signals to generate one uniform signal. The processing unit is further configured to implement a Code Doppler search on the uniform signal to adjust the uniform signal. The processing unit is further configured to correlate the adjusted uniform signal with a local replica of the expected combined reference signal. The processing unit is further configured to output the adjusted uniform signal.

For example, the adjusted uniform signal may be output to a device the apparatus is coupled to. In order to physically receive the one or more signal pairs, the apparatus may comprise an antenna. The antenna may be part of the receiving unit. In other words, the receiving unit may include the antenna.

In some examples, the processing unit may be configured to isolate the two signals of each of the one or more signal pairs by a high pass filter and a low pass filter. In these examples, the processing unit may comprise a high pass filter and a low pass filter. Alternatively or additionally, the processing unit may be configured to isolate the two signals of each of the one or more signal pairs by a down converter and an up converter. In these examples, the processing unit may comprise a down converter and an up converter.

In some examples, the modulation of the two signals of each of the one or more signal pairs results in the two signals to be modulated to have the same frequency, wherein the same frequency is the carrier frequency.

In some examples, the Code Doppler search is an active search and/or a passive search and/or a transform search.

In some examples, a 3D cross-correlation function product is derived from the adjusted uniform signal and used to correlate the adjusted uniform signal with a local replica of the expected signal

The advantages of these parts, steps and processes have been discussed above.

In some examples, the timing of each signal in a signal pair is the same. In other words, the first signal in a signal pair has a signal frequency offset symmetrical to the second signal in a signal pair as the two signals of the signal pair arrive at the device or receiving unit at the same time. This may allow for the difficulty of the receipt and processing of the signals to be greatly reduced as there is no need for extra components to adjust the signal frequency offset of each symmetric signal pair. This in turn may lead to a reduction in power consumption of the device that uses this method or of the unit for receiving and processing signals symmetric about the carrier frequency.

If the two signals of each signal pair arrive at the device or receiving unit at the same time, there may be no need for a priori knowledge of the signal frequency offset sequence versus time of each signal and therefore, any number of symmetric signal pairs about the same carrier frequency can be synchronized at the same time. This in turn may allow the signal frequency offset sequence to change over time and as no a priori knowledge of the signal frequency offset sequence of each signal may be needed.

In some examples, the signals that are isolated from each other are base band signals. The received signals may be changed to baseband signals via an orthogonal frequency-division multiplexing receiver. This receiver may comprise one or more of a band pass filter, an amplifier, an automatic gain control, and an analog to digital converter. This may allow for the power needed to process the signal pair to be reduced and simplify the process of acquisition and/or the processing unit. For example, the apparatus may comprise the orthogonal frequency-division multiplexing receiver. The orthogonal frequency-division multiplexing receiver may be part of the receiving unit. In other words, the receiving unit may include the orthogonal frequency-division multiplexing receiver.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to the apparatus, these aspects may also apply to the method and vice versa.

BRIEF DESCRIPTION OF THE DRAWINGS

These and other aspects of the invention will now be further described, by way of example only, with reference to the accompanying figures, wherein like reference numerals refer to like parts, and in which:

Figure 1     shows a frequency-time graph of two symmetric signal pairs transmitted to a receiver according to an embodiment as described herein;

Figure 2     shows a block diagram of a receiver receiving one signal pair according to an embodiment as described herein;

Figure 3     shows a block diagram of a receiver receiving two signal pairs according to an embodiment as described herein;

Figure 4     shows a block diagram of a receiver receiving two signal pairs according to an embodiment as described herein;

Figure 5     shows a block diagram of a real world example of a signal pair to be received by any of the receivers of figures 2 to 4 as described herein; and

Figure 6     shows a block diagram flow chart of the method of acquisition according to an embodiment as described herein.

DETAILED DESCRIPTION OF THE PREFERRED EMBODIMENTS

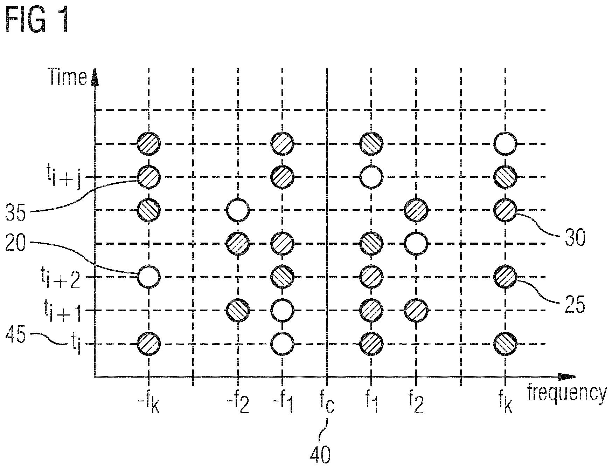

Figure 1 shows a frequency-time graph of two symmetric signal pairs transmitted to a receiver according to an embodiment as described herein.

In the embodiment of figure 1, there are two signal pairs 5, 10 illustrated however it will be appreciated by the skilled person that this method 1000 for acquiring symmetric signals 15, and the unit 1100 used to receive and process these signal pairs 5, 10, could be used for any number of signal pairs 5, 10.

The graph depicts a first signal pair 5 represented by a white circle 20 and a black circle 25, and a second signal pair 10 represented by a light grey circle 30 and a dark gray circle 35. As can be seen, each pair 5, 10 is symmetric about the carrier frequency 40 $f_c$. That is to say, a first signal 20, 30 of a signal pair 5, 10 will have a frequency of $-f_1$ and a second signal 25, 35 of a signal pair 5, 10 will have the frequency $f_1$. Each signal may have any frequency as long as the other signal of the signal pair 5, 10 is symmetric to it about the carrier frequency 40.

In this embodiment, the first signal 20, 30 and the second signal 25, 35 of each signal pair 5, 10 are received at the same time 45 $t_i$. The signals of the signal pair 5, 10 arrive at the device 50 or unit 1100 at same time 45 so that they can be processed at the same time and thus combined. If the signals 20, 25 do not arrive at the same time, a method of rectifying the phase of each signal 20, 25 may be needed. This may greatly increase the power consumption and cost of the device 50 which uses the method 1000 and/or the unit 1100 that is used to receive and process the symmetrical signals 15. The first 20, 30 and second 25, 35 signals of each signal pair 5, 10 may arrive at any time as long as they arrive same time.

In this embodiment, each signal at each epoch 45 $t_i$ is modulated by a chip 55 that, for example, may be overlaid with a data symbol or represents a pure pilot signal. In some examples, this may be a chip multi-processor. Alternatively, it may be any type of chip, processor or electronic device which has the ability to modulate each signal.

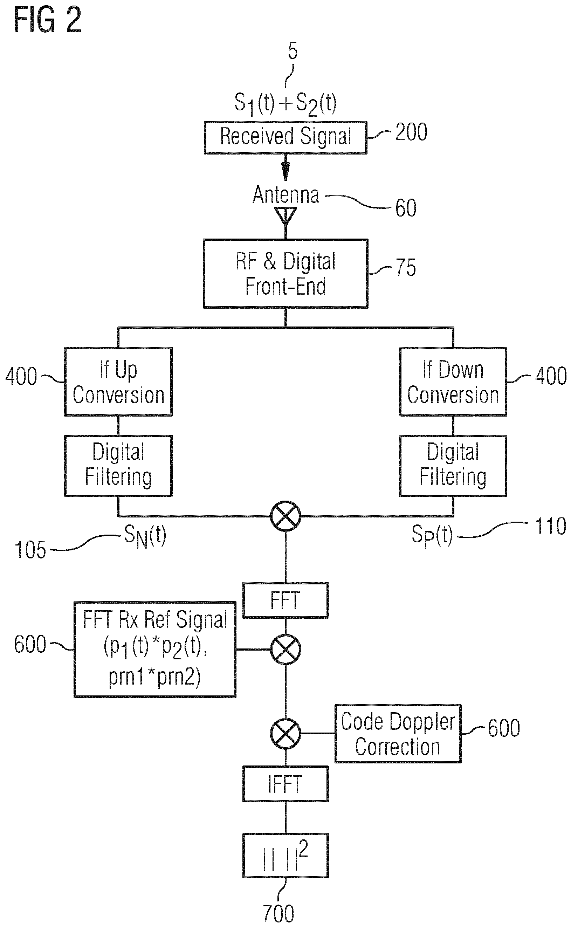

Figure 2 shows a block diagram of a receiver receiving at least one signal pair, e.g. the signal pairs of figure 1, from a transmitter and processed by a down conversion with appropriate filtering and an up conversion with appropriate filtering, and a transform Code Doppler search according to some example implementations as described herein.

In the embodiment of figure 2, the signal pair 5 is received 200 by an antenna 60 however they may be received by any method that allows signals to be received. The code rate 65 of the two symmetric signals 20, 25 are considered to be the same in this embodiment however, they can use different chipping rates. The only constraint is that each signal is symmetric with another signal in each time epoch 45 $t_i$.

In this embodiment, the signal pair 5 is converted to a base band signal 70 in order to ease the processing of the signal pair 5. This is done via a digital front-end 75.

The digital front end 75 is not shown in detail but may comprise one or more band pass filters, and amplifier, an automatic gain control and an analog to digital converter. The signal pair 5 is merged together at the antenna 60 to create one wide frequency band signal 80. This signal 80 may be passed through a band pass filter in order to eliminate the fringe frequencies and narrow the signal 80. This signal 80 is then passed through a low noise amplifier to boost the signal 80 and then passed through a second band pass filter to further eliminate fringe frequencies and interference. The signal 80 then passes through an automatic gain control to increase the dynamic range and control the quantization levels. This signal 80 is then passed through an analog to digital converter which converts the signal 80 to a base band signal 70 which can then be processed.

After being processed by the digital front end 75 and being converted to a base band signal 70, the generic expression of the modulated symmetric signal pair 5 can be expressed as:

$$S_{1,Rec}(t - \tau) = e^{j\varphi_1}A_1\left(\sum_{m=1}^{\infty} d_1(t)e^{(j2\pi(\Delta f_m + f_{d,f_c})t)} \cdot p_1(t)\right.$$
$$\left.\otimes \sum_{k=(m-1)K_H}^{mK_H} C_{1,k}\delta(t - kT_c - \tau)\right) \qquad \text{Eqn. 1}$$

$$S_{2,Rec}(t - \tau) = e^{j\varphi_2}A_2\left(\sum_{m=1}^{\infty} d_2(t)e^{(j2\pi(-\Delta f_m + f_{d,f_c})t)} \cdot p_2(t)\right.$$
$$\left.\otimes \sum_{k=(m-1)K_H}^{mK_H} C_{2,k}\delta(t - kT_c - \tau)\right) \qquad \text{Eqn. 2}$$

Where the symbols have the following definitions:

$A_1$:     Amplitude of the received signal 1
$A_2$:     Amplitude of the received signal 2
$p_1$:     Pulse shape of the received signal 1
$p_2$:     Pulse shape of the received signal 2
$d_1$:     Received data of the signal 1
$d_2$:     Received data of the signal 2
$\varphi_1$:     Phase offset of the signal 1
$\varphi_2$:     Phase offset of the signal 2
m:     Index of frequency offset $\Delta f_m$
$\Delta f_m$:     Frequency offset at index m
$K_H$:     Number of chips within one frequency offset duration
$T_c$:     Component pulse shape (chip) period (1/chip-rate)
$f_{d,fc}$:     Frequency Doppler at the Frequency carrier $f_c$.

Where a first signal 20 of the signal pair $S_{1,Rec}$ has a positive frequency $+\Delta f_m$ with respect to the carrier frequency and the second signal 25 of the signal pair $S_{2,Rec}$ has a negative frequency $-\Delta f_m$ with respect to the carrier frequency 40.

This isolation 300 of the two signals after the conversion to a base band signal 70 is achieved via the isolation of the first 20 and second 25 signals from each other.

In this embodiment, this isolation 300 and modulation 400 of the two signals 20, 25 is achieved via an up converter 85 and a down converter 90. Alternatively, this isolation may be achieved by a high band pass filter 95 and a low band pass filter 100 or any other method of separating the signals 20, 25 of one or more signal pairs 5, 10.

The up converter 85 comprises in this embodiment, a digital up converter and a high band pass filter. The digital up converter converts a digital baseband signal 70 into a higher frequency signal in an intermediate frequency position. The intermediate frequency signal is then passed through a high band pass filter only the signals with the frequency below the carrier frequency 40 $f_c$ remain. As this signal comprises frequencies below the carrier frequency 40, this signal can be expressed as $S_N$ 105.

The down converter 90 comprises in this embodiment, a digital down converter and a low band pass filter. The digital down converter works in a similar way to the digital up converter by converting a digital baseband signal 70 into a lower frequency signal and intermediate frequency position. This intermediate frequency signal is then passed through a low band pass filter so only the signals with a frequency of the carrier frequency 40 $f_c$ remain. As this signal comprises frequencies above the carrier frequency 40, this signal can be expressed as $S_P$ 110.

In this embodiment, there are only two signals 105, 110 symmetric to each other. The two signals can be generalized as negative 105 and positive 110 depending on $\Delta f_m$. The negative signal 105 can be expressed as:

$$S_N(t) = \begin{cases} S_{1,Rec}(t), & \Delta f_m < 0 \\ S_{2,Rec}(t), & \Delta f_m \geq 0 \end{cases}$$

Eqn. 3

And the positive signal 110 can be expressed as:

$$S_P(t) = \begin{cases} S_{1,Rec}(t), & \Delta f_m \geq 0 \\ S_{2,Rec}(t), & \Delta f_m < 0 \end{cases}$$

Eqn. 4

As a result, when these two signals 105, 110 are combined, it can be expressed as:

$$S_{NP}(t - \tau) = S_N(t - \tau)S_P(t - \tau)$$

Eqn. 5

$$\begin{aligned} S_N(t &- \tau)S_P(t - \tau) \\ &= A_1 A_2 d_1(t)d_2(t)e^{(j(\varphi_1 + \varphi_2))}e^{(j4\pi f_{d,f_c}t)}p_1(t)p_2(t) \\ &\otimes \sum_{k=0}^{N_c} C_{1,k}C_{2,k}\delta(t - kT_c - \tau) \end{aligned}$$

Eqn. 6

The acquisition will be applied to the product signal $S_{NP}$ 115. The two signals of the signal pair 105, 110 are now modulated to be at the same frequency 120, the carrier frequency 40 in this embodiment, and have been combined 500 to generate a uniform signal 125 that is double the power of the individual signal 20, 25 received by the unit 1100 or device 50 which uses the method 1000.

As shown in equation 6, $\Delta f_m$ and $-\Delta f_m$ have canceled each other out. Consequently, only the classical two dimensional search remains. This two dimensional search is the Code Doppler search 130.

The Code Doppler search 130 is implemented 600 in order to determine if the received signal 125 is the signal 125 intended for the device 50 that uses this method 1000 or the device 50 that the unit 1100 is coupled to. Firstly, the uniform signal 125 is rotated by the estimated amount of carrier phase. This accounts for the observed Doppler frequency, increasing the reliability of the search 130. A local Pseudo Random Noise (PRN) code is generated based on the current estimate of the code delay and the Doppler frequency. This local code is correlated 700 with the PRN code of the incoming uniform signal 125 and then it is determined if the incoming uniform signal 125 is indeed the signal that the device 50 is searching for. The code delay and the carrier phase of the incoming signal 125 are continuously updated by a series of tracking loops to ensure accuracy of the acquisition method 1000.

In this embodiment, the Code Doppler search 130 is a transform search 135. The transform search 135 uses the properties of the Fast Fourier Transform (FFT) to correct and correlate the uniform signal 125 with the locally generated PRN sequence.

The Code Doppler search 130 may also be a passive search 140 or an active search 145. In the passive search 140, the uniform signal 125 is passed through a delay line whose tap values equal the samples of the PRN sequence to be correlated. In this search 140 however, the PRN sequence and the uniform signal 125 is correlated before being filter matched with the waveform. In this case, the correlation process 700 runs quicker with the rate being the sampling rate. In this search method 140, the sampling rate can be expressed as $f_s = 1/T_s$ where $T_s$ is the sample step.

The active search method 145 is also known as a "correlator receiver" where the generator which generates the local PRN code is slewed for each new Code Doppler hypothesis. The correlation 700 then takes place between the incoming signal 125 and the modified PRN sequence which is modulated with the pulse waveform and the Doppler rotation. The correlation 700 runs at a rate proportional to the integration time equivalent to the minimum data period.

If the two signals 20, 25 have no data and are pilot signals, there is no restriction on the coherent integration time for the correlation process 700. If the data rates of the two signals 20, 25 of each signal pair 5 are equal over time and the data transmitted on the two signals 20, 25 of each signal pair 5 are equal over time, there is also no restriction on the coherent integration time for the correlation process 700.

If the data rates of the two signals 20, 25 of each signal pair 5 are equal over time and the data transmitted on the two signals 20,25 of each signal pair 5 are potentially different over time, the maximum coherent integration time for the correlation process 700 can be expressed as:

$$T_{int} = 1/data\_rate$$

Eqn. 7

where data_rate is the data rate of $S_{1,Rec}$ and $S_{2,Rec}$.

Alternatively, two replica hypotheses $S_{NP}$ 115 can be tested at each $T_{int}$ to extend the coherent integration time. An extended coherent integration time may improve the sensitivity to the acquisition in harsh environment.

If the two data rates are not equal over time, the coherent acquisition may only be done during the integration time equivalent to the minimum data period:

$$(Tint = min\ (1/data\_rate\_1,\ 1/data\_rate\_2)) \qquad \text{Eqn. 8}$$

Where data_rate_1 is the data rate of $S_{1,Rec}$ and data_rate_2 is the data rate of $S_{2,Rec}$.

Alternatively, for each data rate modulated in a symmetric signal pair 5, two replica hypotheses $S_{NP}$ 115 can be tested at each Tint to extend the coherent integration time. An extended coherent integration time may allow for the acquisition of be more accurate.

When the device 50 using the acquisition method 1000 is trying to acquire the signal 5, 10, the device 50 looks for all possible combinations of code delay and Doppler frequencies by generating a local set of possible replica signals 155 and correlating each of them with the incoming signal 125. The result of the correlation output is a measure of the accuracy of the carrier phase and code delay estimates.

The reference signal replica 155 for the acquisition of the signal pair 5, 10 uses a method of combining the pulse shape and the PRN codes of the two signals 20, 25 of the signal pair 5. For the pulse shape, the reference signal uses $p_1(t)$ $p_2(t)$ and for the PRN code, the reference signal uses the PRN of $S_{1,Rec}$ multiplied by the PRN of $S_{2,Rec}$.

The normalized 3D plot 150 of the correlation process 700 and thus, the test acquisition criteria can be expressed as a function of code delay misalignment error and frequency Doppler misalignment error:

$$\left|3DCCF_{p_1 p_2}(\Delta\tau, \Delta\tau)\right| \approx \left|sinc\big((2\pi\Delta f_d N_c T_c)\big) CCF_{p_1 p_2}(\Delta\tau)\right| \qquad \text{Eqn. 9}$$

Where the symbols have the following definitions:

$\Delta\tau = \tau'\text{-}\tau$ represents the code delay misalignment Error
$\Delta f_d = f_{d'}\text{-}f_d$ represents the Frequency Doppler mis-alignment Error
$\tau$ is the code delay between the satellite and the receiver
$f_d$ is the frequency Doppler
$\tau'$ is the code delay hypothesis between the satellite and the receiver
$f_{d'}$ is the frequency Doppler hypothesis
Nc is the number of chip during integration time
Tc is the chip period

If the errors are low, it may then signify that the acquired signal pair 5 is close to the locally generated expected signal 155 and such, may be the signal pair the unit 1100 or device 50 is looking for.

This 3D plot 150 is then assessed using a decision statistic 160. This decision statistic 160 can be expressed as:

$$z = \sum_{k=1}^{M} |Y(k)|^2 \qquad \text{Eqn. 10}$$

Where M is the number of non-coherent integrations, Y is the output of the 3D correlation function 150 of the incoming uniform signal 125 with the local replica 155 and k refers to the kth coherent integration interval.

This decision statistic z 160 is then output and compared to a detection threshold 165 predetermined by the device 50 or by the unit 1100 coupled to the device 50 to assess whether the signal is present or if the signal is the correct signal. This detection threshold 165 is defined according to a target probability of false alarm. The adjusted uniform signal 125 is output 800 to the device 50 only if the decision statistic 160 is greater than the detection threshold 165.

The correlations are integrated over time before further processing. There are two main types of integration that can be considered and these are discussed further below.

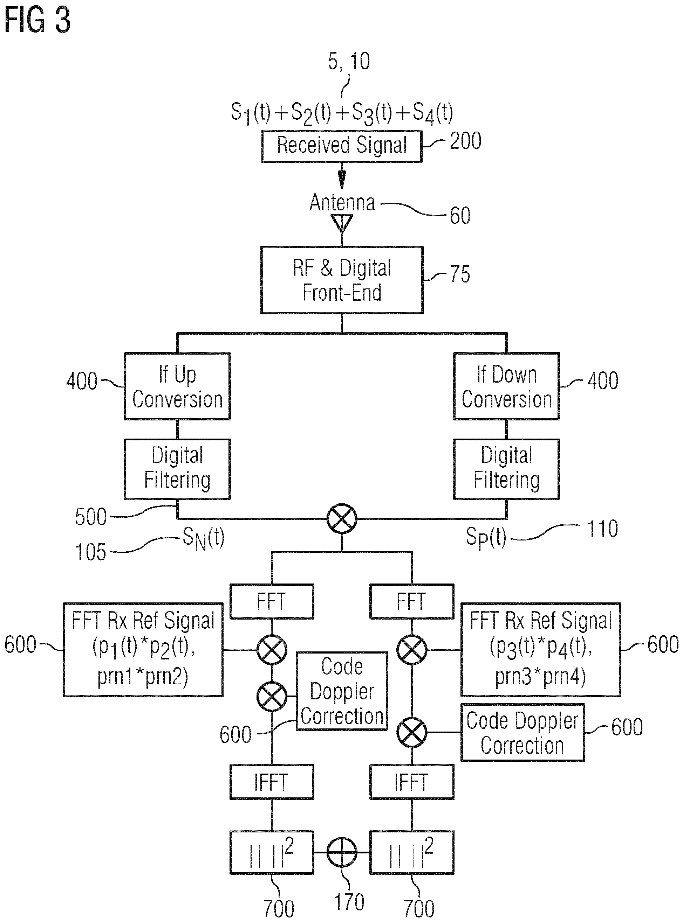

Figure 3 shows a block diagram of a receiver receiving two signal pairs from a transmitter where the phase offset of the two pairs are unequal and where the signal pairs are processed by a down conversion with appropriate filtering and an up conversion with appropriate filtering, and a transform Code Doppler search according to some example implementations as described herein.

In the embodiment of figure 3, there are two signal pairs 5, 10. However, it will be appreciated by the skilled person that this method can be used for any number of signal pairs symmetric about a carrier frequency.

In this embodiment, the phase offset of the first signal pair 5 is different to the phase offset of the second signal pair 10, i.e.

$$\varphi_1 + \varphi_2 \neq \varphi_3 + \varphi_4 \qquad\qquad \text{Eqn. 11}$$

Where φ is the phase offset and the subscript indicates which signal the phase offset belongs to.

As the phase offset of the two signal pairs 5, 10 are unequal, the 3D CCF 150 of the two products of the two signal pairs 5, 10 3DCCF$_{p1p2}$ and 3DCCF$_{p3p4}$ must be added non-coherently 170. A non-coherent integration 170 consists of adding the results of the correlations 150 together before entering the decision process. This can be seen in figure 3 as the decision statistic 160 summation occurs before the combination of the two signal pairs 5, 10.

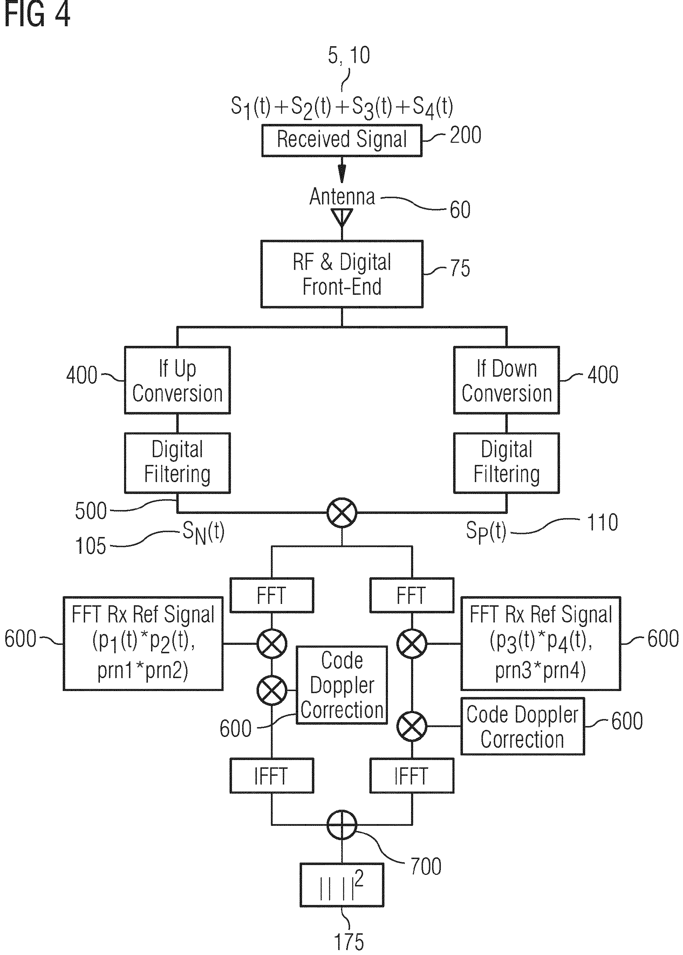

Figure 4 shows a block diagram of a receiver receiving two signal pairs, e.g. the signal pairs of figure 1, from a transmitter where the phase offset of the two pairs are equal and where the two signal pairs are processed by a down conversion with appropriate filtering and an up conversion with appropriate filtering, and a transform Code Doppler search according to some example implementations as described herein.

In the embodiment of figure 4, there are two signal pairs 5, 10. However, it will be appreciated by the skilled person that this method can be used for any number of signal pairs symmetric about the carrier frequency.

In this embodiment, the phase offset of the two signal pairs 5, 10 are equal i.e.

$$\varphi_1 + \varphi_2 = \varphi_3 + \varphi_4 \qquad\qquad \text{Eqn. 12}$$

Where φ is the phase offset and the subscript indicates which signal the phase offset belongs to.

As the phase offset of the two signal pairs 5, 10 are equal, the 3D CCF 150 of the two products of the two signal pairs 5, 10 3DCCF$_{p1p2}$ and 3DCCF$_{p3p4}$ can be added coherently 175. A coherent integration 175 consists of using longer integration times, such as multiples of the code length, before the correlation output. This can be seen in figure 4 as the decision statistic 160 summation occurs after the combination of the two signal pairs 5, 10.

A coherent integration 175 may be preferable to a non-coherent integration 170 as there are fewer squaring losses in a coherent integration 175 however, coherent integration 175 may be limited by the bit boundaries that carry the data of the incoming signal pair.

Referring back to figures 2-4, the shape of the signal 180 after the digital front end 75 is symmetric in nature and comprises two vertical drops in power symmetric about the carrier frequency 40. This is due to the symmetric nature of the two signals 20, 25 in the signal pair 5 and the band pass filters in the digital front end 75 which eliminate the fringe frequencies. In these examples, the signal 180 after the digital front end 75 is limited to ±45MHz with respect to the carrier frequency 40.

The base band signal 70 then passes through an Rx filter which is the up converter 85 with the appropriate band pass filter and the down converter 90 with the appropriate band pass filter. In these examples, the signals 105, 110 after the up 85 and down 90 converters are ±12.5MHz with respect to the carrier frequency 40 and the two signals are almost identical to each other. These two signals are then combined 500 and processed by the Code Doppler search 130. It will be appreciated by the skilled person that the bandwidth of the signal 180 and the bandwidth of the two modulated signals 105, 110 may be different to those mentioned in this disclosure.

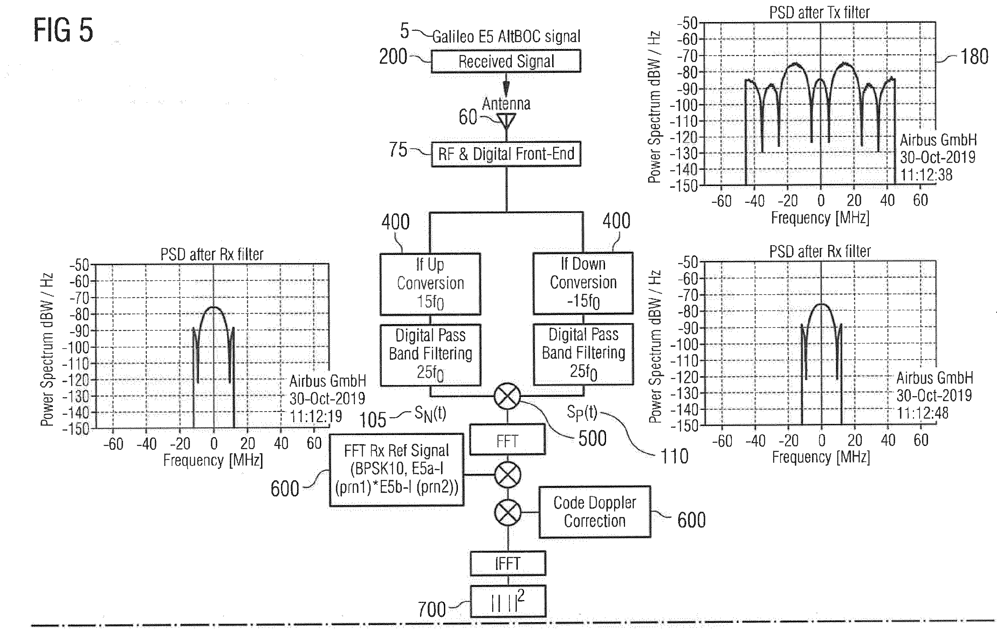

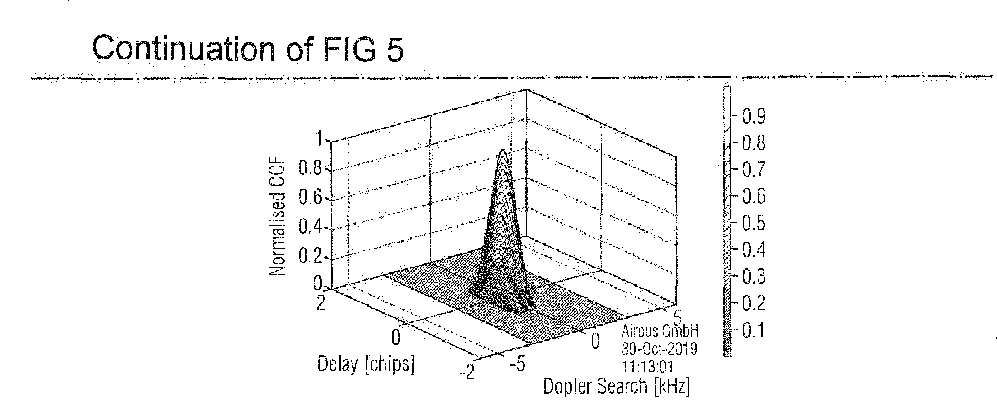

Figure 5 shows a block diagram of a real world embodiment of a signal pair being received by the receiver where the signal pair is processed by a down conversion with appropriate filtering and an up conversion with appropriate filtering, and a transform Code Doppler search according to some example implementations as described herein.

In the embodiment of figure 5, the signal is a Galileo E5 AltBOC signal transmitted over a 90 f$_0$ Tx bandwidth.

It can be seen in figure 5 that the shape of the signal 180 after the digital front end 75 is symmetric in nature and comprise two vertical drops in power symmetric about the carrier frequency 40. This is due to the symmetric nature of the two signals 20, 25 in the signal pair 5 and the band pass filters in the digital front end 75 which eliminate the fringe frequencies.

The base band signal 70 then passes through an Rx filter which is the up converter 85 with the appropriate band pass filter and the down converter 90 with the appropriate band pass filter. It can be seen, for example, in the branch comprising the S$_N$(t) signal 105 that the signal that was received from the Tx filter was shifted upward by 15f$_0$. That is, the frequency was increased and that the digital band pass filtering restricts the signal to 25f$_0$ bandwidth i.e. ±12.5 f$_0$ with respect to the carrier frequency 40. It can be seen that this signal is identical to the signal output 110 of the other branch. These two signals are then combined 500 and processed by the Code Doppler search 130.

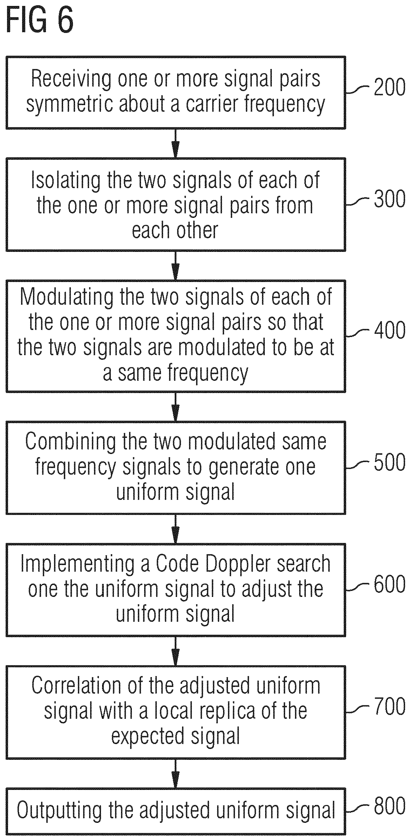

Figure 6 shows a block diagram flow chart of the method of acquisition according to some example implementations as described herein.

The method of acquisition 1000 of one or more pairs of signal pairs 5, 10 symmetric about a carrier frequency 40 begins with receiving 200 the one or more signal pairs 5, 10 via an antenna 60 or any other method of receiving a signal pair 5, 10. Each of the signals 20, 25 in the one or more signal pairs 5, 10 are then isolated 300 from each other and each one modulated 400 to be at a same frequency. These signals 20, 25 are then combined 500 to generate one uniform signal 125. A Code Doppler search 130 is then implemented 600 on this uniform signal 125 and correlated 700 with a local replica of the expected signal 155 and the result of the correlation 160 is then output 800 and compared to a detection threshold 165 which confirms if the received signal pair 5, 10 is the correct signal pair.

No doubt many other effective alternatives will occur to the skilled person. It will be understood that the invention is not limited to the described embodiments and encompasses modifications apparent to those skilled in the art and lying within the scope of the claims appended hereto.

**Claims**

1. A method (1000) for the acquisition of symmetric signals (15) performed by an apparatus, the method comprising:

   receiving (200) one or more signal pairs (5, 10) symmetric about one or more carrier frequencies (40),
   isolating (300) the two signals (20, 25) of each of the one or more signal pairs (5, 10) from each other,
   modulating (400) the two signals (20, 25) of each of the one or more signal pairs (5, 10) so that the two signals are modulated to have a same frequency,
   combining (500) the two modulated same frequency signals to generate one uniform signal (125), that is double the power of the two signals,
   implementing (600) a Code Doppler search (130) on the uniform signal (125) to adjust the uniform signal (125),
   correlation (700) of the adjusted uniform signal (125) with a reference signal (155), and
   outputting (800) the result of the correlation (160).

2. The method (1000) as claimed in claim 1, wherein there is a plurality of signal pairs (5, 10) included in the one or more signal pairs (5, 10).

3. The method (1000) as claimed in claim 2, wherein the plurality of received signal pairs (5, 10) are symmetric about the one or more carrier frequencies (40).

4. The method (1000) as claimed in claim 3, wherein the plurality of received signal pairs (5, 10) are symmetric about the same carrier frequency (40) included in the one or more carrier frequencies (40).

5. The method (1000) as claimed in claim 1 or 2, wherein the two signals (20, 25) of each of the one or more signal pairs (5, 10) are modulated to have the same frequency, wherein the same frequency is the carrier frequency (40).

6. The method (1000) as claimed in any one of claims 1 to 5, wherein the two signals (20, 25) in each of the one or more signal pairs (5, 10) are isolated by a high pass filter (95) and a low pass filter (100).

7. The method as claimed in any one of claims 1 to 5, wherein the two signals (20, 25) in each of the one or more signal pairs (5, 10) are isolated by a up converter (85) and a down converter (90).

8. The method (1000) as claimed in any one of claims 1 to 7, wherein the Code Doppler search (130) is implemented via an active search (145) and/or a passive search (140) and/or a transform search (135).

9. The method (1000) as claimed in any one of claims 1 to 8, wherein one or more 3D cross-correlation function products (150) are derived from the adjusted uniform signal (125) and used to correlate the adjusted uniform signal (150) with the reference signal (155).

10. The method (1000) as claimed in claim 9, wherein the one or more 3D cross-correlation function products (150) derived from the adjusted uniform signal (125) are added coherently (175) or non-coherently (170).

11. An apparatus (1100) for the acquisition of symmetric signals (15) comprising:

    a receiving unit (1120), and
    a processing unit (1140)
    wherein the receiving unit (1120) is configured to receive (200) one or more signal pairs (5, 10) symmetric about one or more carrier frequencies (40), and
    wherein the processing unit (1140) is configured to
    isolate (300) the two signals (20, 25) of each of the one or more signal pairs (5, 10) from each other,
    modulate (400) the two signals (20, 25) of each of the one or more signal pairs (5, 10) so that the two signals (20, 25) are modulated to be at a same frequency,
combine (500) two modulated same frequency signals (20, 25) to generate one uniform signal (125), that is double the power of the two signals,
implement (600) a Code Doppler search (130) on the uniform signal (125) to adjust the uniform signal (125),
correlate (700) the adjusted uniform signal (125) with a reference signal (155), and
output (800) the result of the correlation (160).

12. The apparatus (1100) as claimed in claim 11, wherein the processing unit (1140) is configured to isolate the two signals (20, 25) of each of the one or more signal pairs (5, 10) by a high pass filter (95) and a low pass filter (100) and/or by a down converter (90) and an up converter (85).

13. The apparatus (1100) as claimed in claim 11 or 12, wherein the modulation of the two signals (20, 25) of each of the one or more signal pairs (5, 10) results in the two signals (20, 25) to be modulated to have the same frequency, wherein the same frequency is the carrier frequency (40).

14. The apparatus (1100) as claimed in any one of claims 11 to 13, wherein the Code Doppler search (130) is an active search (145) and/or a passive search (140) and/or a transform search (135).

15. The apparatus (1100) as claimed in any one of claims 11 to 14, wherein the processing unit (1140) is configured to derive a 3D cross-correlation function product (150) from the adjusted uniform signal (125) and to use the derived 3D cross-correlation function to correlate the adjusted uniform signal (150) with the reference signal (155).

**Patentansprüche**

1. Verfahren (1000) zur Erfassung von symmetrischen Signalen (15), das von einer Vorrichtung durchgeführt wird, wobei das Verfahren umfasst:

Empfangen (200) eines oder mehrerer Signalpaare (5, 10) symmetrisch um eine oder mehrere Trägerfrequenzen (40),
Isolieren (300) der beiden Signale (20, 25) jedes der ein oder mehreren Signalpaare (5, 10) voneinander,
Modulation (400) der beiden Signale (20, 25) jedes der ein oder mehreren Signalpaare (5, 10), so dass die beiden Signale so moduliert werden, dass sie eine gleiche Frequenz haben,
Kombinieren (500) der beiden modulierten Signale gleicher Frequenz, um ein gleichförmiges Signal (125) zu erzeugen, das die doppelte Leistung der beiden Signale aufweist,
Implementieren (600) einer Code-Doppler-Suche (130) auf das gleichförmige Signal (125), um das einheitliche Signal (125) anzupassen,
Korrelation (700) des angepassten gleichförmigen Signals (125) mit einem Referenzsignal (155), und
Ausgeben (800) des Ergebnisses der Korrelation (160).

2. Verfahren (1000) nach Anspruch 1, wobei es eine Vielzahl von Signalpaaren (5, 10) in dem einen oder den mehreren Signalpaaren (5, 10) gibt.

3. Verfahren (1000) nach Anspruch 2, wobei die Vielzahl von empfangenen Signalpaaren (5, 10) symmetrisch um die eine oder mehrere Trägerfrequenzen (40) sind.

4. Verfahren (1000) nach Anspruch 3, wobei die Vielzahl von empfangenen Signalpaaren (5, 10) symmetrisch um die gleiche Trägerfrequenz (40) sind, die in der einen oder den mehreren Trägerfrequenzen (40) enthalten ist.

5. Verfahren (1000) nach Anspruch 1 oder 2, wobei die beiden Signale (20, 25) jedes der einen oder mehreren Signalpaare (5, 10) so moduliert werden, dass sie die gleiche Frequenz haben, wobei die gleiche Frequenz die Trägerfrequenz (40) ist.

6. Verfahren (1000) nach einem der Ansprüche 1 bis 5, wobei die beiden Signale (20, 25) in jedem der einen oder mehreren Signalpaare (5, 10) durch ein Hochpassfilter (95) und ein Tiefpassfilter (100) getrennt werden.

7. Verfahren nach einem der Ansprüche 1 bis 5, wobei die beiden Signale (20, 25) in jedem der einen oder mehreren Signalpaare (5, 10) durch einen Aufwärtswandler (85) und einen Abwärtswandler (90) getrennt werden.

**8.** Verfahren (1000) nach einem der Ansprüche 1 bis 7, wobei die Code-Doppler-Suche (130) über eine aktive Suche (145) und/oder eine passive Suche (140) und/oder eine Transformations-Suche (135) realisiert wird.

**9.** Verfahren (1000) nach einem der Ansprüche 1 bis 8, wobei ein oder mehrere 3D-Kreuzkorrelationsfunktionsprodukte (150) aus dem angepassten gleichförmigen Signal (125) abgeleitet und zur Korrelation des angepassten gleichförmigen Signals (150) mit dem Referenzsignal (155) verwendet werden.

**10.** Verfahren (1000) nach Anspruch 9, wobei die ein oder mehreren 3D-Kreuzkorrelationsfunktionsprodukte (150), die aus dem angepassten gleichförmigen Signal (125) abgeleitet sind, kohärent (175) oder nicht-kohärent (170) addiert werden.

**11.** Vorrichtung (1100) zur Erfassung von symmetrischen Signalen (15), die umfasst:

eine Empfangseinheit (1120), und
eine Verarbeitungseinheit (1140)
wobei die Empfangseinheit (1120) so konfiguriert ist, dass sie ein oder mehrere Signalpaare (5, 10) symmetrisch um eine oder mehrere Trägerfrequenzen (40) empfängt (200), und
wobei die Verarbeitungseinheit (1140) konfiguriert ist, um
die beiden Signale (20, 25) jedes der ein oder mehreren Signalpaare (5, 10) voneinander zu trennen (300),
die beiden Signale (20, 25) jedes der ein oder mehreren Signalpaare (5, 10) so zu modulieren (400), dass die beiden Signale (20, 25) auf eine gleiche Frequenz moduliert werden,
zwei modulierte Gleichfrequenzsignale (20, 25) zu kombinieren (500), um ein gleichförmiges Signal (125) zu erzeugen, das die doppelte Leistung der beiden Signale aufweist,
eine Code-Doppler-Suche (130) an dem gleichförmigen Signal (125) durchzuführen (600), um das gleichförmige Signal (125) anzupassen,
das angepasste gleichförmige Signal (125) mit einem Referenzsignal (155) zu korrelieren (600), und
das Ergebnis der Korrelation (160) auszugeben (800).

**12.** Vorrichtung (1100) nach Anspruch 11, wobei die Verarbeitungseinheit (1140) konfiguriert ist, die beiden Signale (20, 25) jedes der einen oder mehreren Signalpaare (5, 10) durch ein Hochpassfilter (95) und ein Tiefpassfilter (100) und/oder durch einen Abwärtswandler (90) und einen Aufwärtswandler (85) zu isolieren.

**13.** Vorrichtung (1100) nach Anspruch 11 oder 12, wobei die Modulation der beiden Signale (20, 25) jedes der einen oder mehreren Signalpaare (5, 10) dazu führt, dass die beiden zu modulierenden Signale (20, 25) die gleiche Frequenz aufweisen, wobei die gleiche Frequenz die Trägerfrequenz (40) ist.

**14.** Vorrichtung (1100) nach einem der Ansprüche 11 bis 13, wobei die Code-Doppler-Suche (130) eine aktive Suche (145) und/oder eine passive Suche (140) und/oder eine Transformations-Suche (135) ist.

**15.** Vorrichtung (1100) nach einem der Ansprüche 11 bis 14, wobei die Verarbeitungseinheit (1140) konfiguriert ist, ein 3D-Kreuzkorrelationsfunktionsprodukt (150) aus dem angepassten gleichförmigen Signal (125) abzuleiten und die abgeleitete 3D-Kreuzkorrelationsfunktion zu verwenden, um das angepasste gleichförmige Signal (150) mit dem Referenzsignal (155) zu korrelieren.

## Revendications

**1.** Procédé (1000) d'acquisition de signaux symétriques (15) exécuté par un appareil, le procédé comprenant:

la réception (200) d'une ou plusieurs paires de signaux (5, 10) symétriques par rapport à une ou plusieurs fréquences porteuses (40),
l'isolement (300) des deux signaux (20, 25) de chacune des paires de signaux (5, 10) l'un par rapport à l'autre,
la modulation ((400) des deux signaux (20, 25) de chacune de la ou des paires de signaux (5, 10) de manière à ce que les deux signaux soient modulés pour avoir la même fréquence,
la combinaison (500) des deux signaux modulés de même fréquence pour générer un signal uniforme (125), c'est-à-dire le double de la puissance des deux signaux,
la mise en oeuvre (600) d'une recherche Doppler codée (130) sur le signal uniforme (125) pour ajuster le signal uniforme (125),

la corrélation (700) du signal uniforme ajusté (125) avec un signal de référence (155), et
la sortie (800) du résultat de la corrélation (160).

2. Procédé (1000) selon la revendication 1, dans lequel une pluralité de paires de signaux (5, 10) est incluse dans la ou les paires de signaux (5, 10).

3. Procédé (1000) selon la revendication 2, dans lequel la pluralité de paires de signaux reçus (5, 10) est symétrique par rapport à la ou les fréquences porteuses (40).

4. Procédé (1000) selon la revendication 3, dans lequel la pluralité de paires de signaux reçus (5, 10) sont symétriques par rapport à la même fréquence porteuse (40) incluses dans la ou les fréquences porteuses (40).

5. Procédé (1000) selon la revendication 1 ou 2, dans lequel les deux signaux (20, 25) de chacune des paires de signaux (5, 10) sont modulés pour avoir la même fréquence, la même fréquence étant la fréquence porteuse (40).

6. Procédé (1000) selon l'une quelconque des revendications 1 à 5, dans lequel les deux signaux (20, 25) de chacune de la ou des paires de signaux (5, 10) sont isolés par un filtre passe-haut (95) et un filtre passe-bas (100).

7. Procédé (1000) selon l'une quelconque des revendications 1 à 5, dans lequel les deux signaux (20, 25) de chacune de la ou des paires de signaux (5, 10) sont isolés par un convertisseur élévateur (85) et un convertisseur abaisseur (90).

8. Procédé (1000) selon l'une quelconque des revendications 1 à 7, dans lequel la recherche Doppler de code (130) est mise en oeuvre par une recherche active (145) et/ou une recherche passive (140) et/ou une recherche de transformée (135).

9. Procédé (1000) selon l'une quelconque des revendications 1 à 8, dans lequel un ou plusieurs produits de fonction de corrélation croisée 3D (150) sont dérivés du signal uniforme ajusté (125) et utilisés pour corréler le signal uniforme ajusté (150) avec le signal de référence (155).

10. Procédé (1000) selon la revendication 9, dans lequel les produits d'une ou plusieurs fonctions de corrélation croisée 3D (150) dérivées du signal uniforme ajusté (125) sont ajoutés de manière cohérente (175) ou non cohérente (170).

11. Appareil (1100) destiné à l'acquisition de signaux symétriques (15) comprenant:

    une unité de réception (1120); et
    une unité de traitement (1140),
    dans lequel l'unité de réception (1120) est configuré pour recevoir (200) une ou plusieurs paires de signaux (5, 10) symétriques par rapport à une ou plusieurs fréquences porteuses (40), et
    dans lequel l'unité de traitement (1140) est configurée pour
    isoler (300) les deux signaux (20, 25) de chacune de la ou des paires de signaux (5, 10) l'un par rapport à l'autre,
    moduler (400) les deux signaux (20, 25) de chacune de la ou des paires de signaux (5, 10) de manière à ce que les deux signaux soient modulés pour avoir la même fréquence,
    combiner (500) les deux signaux modulés de même fréquence (20, 25) pour générer un signal uniforme (125), c'est-à-dire le double de la puissance des deux signaux,
    mettre en oeuvre (600) une recherche Doppler de code (130) sur le signal uniforme (125) pour ajuster le signal uniforme (125),
    corréler (700) le signal uniforme ajusté (125) avec un signal de référence (155), et
    délivrer (800) le résultat de la corrélation (160).

12. Appareil (1100) selon la revendication 11, dans lequel l'unité de traitement (1140) est configurée pour isoler les deux signaux (20, 25) de chacune de la ou des paires de signaux (5, 10) par un filtre passe-haut (95) et un filtre passe-bas (100) et/ou par un convertisseur abaisseur (90) et un convertisseur élévateur (85).

13. Appareil (1100) selon la revendication 11 ou 12, dans lequel la modulation des deux signaux (20, 25) de chacune de la ou des paires de signaux (5, 10) fait que les deux signaux (20, 25) à moduler ont la même fréquence, la même fréquence étant la fréquence porteuse (40).

14. Appareil (1100) selon l'une quelconque des revendications 11 à 13, dans lequel la recherche Doppler de code (130) est une recherche active (145) et/ou une recherche passive (140) et/ou une recherche de transformée (135).

**15.** Appareil (1100) selon l'une quelconque des revendications 11 à 14, dans lequel l'unité de traitement (1140) est configurée pour dériver un produit de fonction de corrélation croisée 3D (150) du signal uniforme ajusté (125) et pour utiliser la fonction de corrélation croisée 3D dérivée pour corréler le signal uniforme ajusté (150) avec le signal de référence (155).

# FIG 1

# FIG 2

5

$S_1(t) + S_2(t)$

| Received Signal | ⌐ 200 |

Antenna — 60

| RF & Digital Front-End | 75 |

| If Up Conversion | 400 |  | If Down Conversion | 400 |

| Digital Filtering |  |  | Digital Filtering |

105 — $S_N(t)$    ⊗    $S_P(t)$ — 110

| FFT |

| FFT Rx Ref Signal $(p_1(t)*p_2(t),$ prn1*prn2) | 600 |    ⊗

⊗    | Code Doppler Correction | 600 |

| IFFT |

| $\| \, \|^2$ |

700

# FIG 3

$$S_1(t) + S_2(t) + S_3(t) + S_4(t)$$

5, 10

Received Signal — 200

Antenna — 60

RF & Digital Front-End — 75

400 — If Up Conversion

If Down Conversion — 400

Digital Filtering

Digital Filtering

500 —

$S_N(t)$

105 —

$S_P(t)$ — 110

FFT

FFT

600 — FFT Rx Ref Signal ($p_1(t)*p_2(t)$, prn1*prn2)

FFT Rx Ref Signal ($p_3(t)*p_4(t)$, prn3*prn4) — 600

Code Doppler Correction

600 —

Code Doppler Correction — 600

IFFT

IFFT

$||\ ||^2$

$||\ ||^2$

700

170

700

# FIG 4

FIG 5

EP 3 839 569 B1

# FIG 6

Receiving one or more signal pairs symmetric about a carrier frequency — 200

Isolating the two signals of each of the one or more signal pairs from each other — 300

Modulating the two signals of each of the one or more signal pairs so that the two signals are modulated to be at a same frequency — 400

Combining the two modulated same frequency signals to generate one uniform signal — 500

Implementing a Code Doppler search one the uniform signal to adjust the uniform signal — 600

Correlation of the adjusted uniform signal with a local replica of the expected signal — 700

Outputting the adjusted uniform signal — 800

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3057252 A1

### Non-patent literature cited in the description

- **DOVIS FABIO et al.** *Multiresolution Acquisition Engine Tailored to the Galileo AltBOC signals*
- **BOTTERON C. et al.** *A Flexible Galileo E1 Receiver Platform for the Validation of Low Power and Rapid Acquisition Schemes*
- **FISCHER S. et al.** *Acquisition Concepts for Galileo BOC*
- **LI YANG et al.** *The Research of Side-Band Acquisition for BOC-Modulated Signal*